# FASCICULE DE BREVET EUROPEEN

(11) **EP 1 963 729 B1**
(45) Date de publication et mention de la délivrance du brevet: **08.04.2009**
(21) Numéro de dépôt: 06841903.5
(22) Date de dépôt: 11.12.2006
(51) Int. Cl.: F16L 37/36

(54) **COUPLEUR RIGIDE POUR CONDUITES DE FLUIDE SOUS PRESSION**
STEIFE KOPPLUNGSVORRICHTUNG FÜR LEITUNGEN MIT UNTER DRUCK STEHENDEN FLÜSSIGKEITEN
RIGID COUPLING DEVICE FOR PRESSURIZED-FLUID CONDUITS

(30) Priorité: 20.12.2005 FR 0512953
(43) Date de publication de la demande: 03.09.2008
(73) Titulaire: Parker Hannifin France S.A.S., 74100 Ville la Grand (FR)
(72) Inventeur: ARAGONES, David, F-74140 Sciez (FR); GIAGNOLI, Sylvain, F-74100 Ambilly (FR); ANODEAU, Jean-Pierre, F-74380 Cranves Sales (FR)
(74) Mandataire: Maureau, Philippe
(86) Numéro de dépôt international: PCT/FR2006/002698
(87) Numéro de publication internationale: WO 2007/080255

(56) Documents cités:
- EP-B- 0 847 511
- WO-A-94/10494

## Description

La présente invention concerne un coupleur rigide pour conduites de fluide sous pression, permettant la connexion de ces conduites alors que du fluide sous pression subsiste dans l'une d'elles.

Ce coupleur comprend, de manière connue en soi, un élément mâle et un élément femelle dont les extrémités à connecter sont fermées par des soupapes. L'élément mâle, relié à un outil actionné par le fluide, contient du fluide sous pression, tandis que l'élément femelle relié à la source de fluide n'est pas sous pression.

Le brevet EP 0 847 511, au nom du Demandeur, décrit un tel coupleur dans lequel l'élément femelle possède un manchon extérieur fixe présentant une extrémité de raccordement à une conduite d'alimentation en fluide hydraulique, et un corps intérieur mobile en coulissement contenant la soupape de l'élément femelle, un ressort de rappel étant interposé entre le manchon extérieur et le corps intérieur mobile.

Chaque soupape comprend un clapet obturateur venant appuyer contre le clapet obturateur de l'autre soupape lors de la connexion, un ressort de rappel pressant ce clapet contre un siège et une butée limitant la course d'ouverture du clapet.

La butée de l'élément mâle contenant du fluide sous pression est fixe, tandis que la butée de l'élément femelle est montée coulissante dans l'élément femelle, de manière à pouvoir occuper une position fixe avancée, dans laquelle le clapet est en appui contre la butée lorsque les éléments mâle et femelle sont connectés, et à pouvoir reculer dans l'élément femelle, afin d'autoriser un recul du clapet qui lui est associé au-delà de la course d'ouverture précitée, la distance de recul correspondant sensiblement à la course d'ouverture du clapet de l'élément mâle.

Le coupleur comprend également des moyens de verrouillage et de rappel de la butée coulissante en position avancée, ces moyens autorisant le mouvement de recul de la butée coulissante lors de la connexion des éléments mâle et femelle, et verrouillant la butée coulissante en position avancée une fois cette connexion réalisée.

Dans un tel coupleur, il faut permettre les mouvements entrants et sortants du corps intérieur mobile par rapport au manchon extérieur fixe. A cet effet, il est d'usage "d'équilibrer hydrauliquement" le corps intérieur mobile à l'intérieur du manchon extérieur fixe, c'est-à-dire d'employer des relations entre pressions et surfaces de sorte que la somme des forces engendrées par les effets de pression s'annulent.

Le ressort de rappel du corps intérieur mobile permet de compenser la faible différence potentielle des efforts pouvant être due aux tolérances de fabrication exprimées en termes de diamètres et frottements.

Ici, la technique utilisée est dite "d'équilibrage différentiel".

La veine fluide centrale est continue. Trois organes d'étanchéité sont employés, dont deux de diamètre identique D1 et un troisième d'un diamètre supérieur D2 avec D2/D1 = √2. Cette relation permet à la section d'étanchéité de petit diamètre D1 d'être identique à la section de la couronne formée entre les petits diamètres D1 et le grand diamètre D2.

L'alimentation en fluide sous pression sur la couronne entre grand et petit diamètres se fait par le biais d'un orifice de transfert traversant le corps intérieur mobile.

Les forces exercées sur les deux organes d'étanchéité de petit diamètre et sur la couronne entre grand et petit diamètre sont de même intensité mais de sens opposés, ce qui équilibre la position du corps intérieur mobile dans le manchon externe fixe à un endroit prédéfini par les butées du ressort de rappel du corps intérieur.

Cette technique est économiquement avantageuse quant à la réalisation des pièces mécaniques et présente de bonnes caractéristiques hydrodynamiques mais la relation mécanique entre le corps intérieur mobile portant notamment le clapet femelle et le manchon externe fixe est complexe à mettre en oeuvre.

Pour assurer cette relation mécanique, les moyens de verrouillage et de rappel de la butée coulissante en position avancée comprennent le plus souvent des douilles mobiles internes et externes au corps intérieur mobile de l'élément femelle, et mises en relation par des billes ou pions traversant le corps intérieur mobile.

Ces éléments permettent à la fois d'équilibrer (au sens hydraulique) les positions des clapets des éléments mâle et femelle dans une position de circuit passant pour le fluide hydraulique, et d'autoriser une surcourse du clapet à l'intérieur de l'élément femelle pour assurer le verrouillage mécanique des éléments mâle et femelle malgré la proéminence d'environ 3 à 4 mm du clapet de l'élément mâle, due au fluide sous pression qu'il contient.

Les éléments mâle et femelle étant mécaniquement connectés, verrouillés, l'ouverture du circuit hydraulique, donc l'équilibrage des clapets des éléments mâle et femelle, se fait par mise sous pression de la ligne hydraulique dans l'élément femelle jusqu'à ce que la pression y soit suffisante pour contrer la pression existante dans l'élément mâle et ouvrir la soupape de ce dernier.

Cette disposition fait appel à un grand nombre de composants, et nécessite ainsi une grande précision dans la réalisation et l'assemblage de ces composants, ce qui grève le coût global du produit.

La présente invention vise à éviter ces inconvénients en fournissant un coupleur rigide pour conduites de fluide sous pression, comportant un nombre réduit de composants, en particulier pour assurer le verrouillage sélectif et le rappel de la butée coulissante en position avancée.

A cet effet, l'invention a pour objet un coupleur rigide pour conduites de fluide sous pression, tel que décrit en préambule, et dans lequel le clapet de l'élément femelle est prolongé postérieurement par un organe à butée escamotable de forme générale sensiblement tubulaire en matière élastiquement déformable, présentant au moins une saillie radiale vers l'extérieur formant butée contre une saillie radiale vers l'intérieur correspondante du corps intérieur, ainsi qu'une extrémité ouverte en regard de l'embouchure de la cavité cylindrique de l'extrémité de raccordement, le recul simultané du corps intérieur dans le manchon extérieur et du clapet dans le corps intérieur ayant pour effet de rétreindre cette extrémité ouverte en l'introduisant de force dans ladite cavité cylindrique de l'extrémité de raccordement, de manière à effacer ladite butée.

Ainsi, l'idée inventive consiste à associer le clapet de l'élément femelle à un unique organe portant la butée du clapet et apte à se déformer élastiquement lors de la connexion des éléments mâle et femelle, de manière à effacer la butée et permettre la surcourse du clapet. Cet organe élastique permet d'éviter que le clapet de l'élément femelle s'enfonce à l'intérieur de l'élément femelle du fait d'un effort axial dû aux forces hydrodynamiques du flux "mâle vers femelle", et provoque une fermeture accidentelle du circuit. La production de ce coupleur est peu onéreuse car il ne comporte qu'un seul organe élastique de butée.

De manière avantageuse, l'embouchure de la cavité cylindrique de l'extrémité de raccordement est chanfreinée de manière à former une rampe annulaire, et l'extrémité ouverte de l'organe à butée escamotable est de forme tronconique pour glisser contre cette rampe annulaire, se rétreindre et s'introduire dans la cavité.

Dans une forme de réalisation préférée, l'organe à butée escamotable présente au moins deux fentes longitudinales créant des pattes longitudinales dont le maintien en position normale est assuré par l'élasticité de l'organe de butée.

L'organe à butée escamotable comporte par exemple une partie antérieure de fixation au clapet et un corps principal en forme de tige pourvue d'au moins deux ailettes de guidage, en saillie radiale vers l'extérieur, qui ne perturbent pas l'écoulement de fluide et assurent un positionnement et un guidage de l'organe à butée en coulissement dans le corps intérieur.

Pour sa bonne compréhension, l'invention est à nouveau décrite ci-dessous en référence au dessin schématique annexé représentant, à titre d'exemple non limitatif, une forme de réalisation du coupleur rigide en question.
La figure 1 est une vue en coupe longitudinale de l'élément femelle du coupleur selon l'invention.
La figure 2 est une vue en perspective d'un composant de l'élément femelle dudit coupleur.
Les figures 3 à 6 sont des vues en coupe longitudinales, dans trois positions successives de connexion des éléments mâle et femelle du coupleur.
La figure 7 est une vue similaire à la figure 3 lorsque l'élément mâle ne contient pas de fluide sous pression.

Le coupleur selon l'invention représenté sur les figures comprend un élément mâle 2 et un élément femelle 3 dont les extrémités à connecter sont fermées par des soupapes.

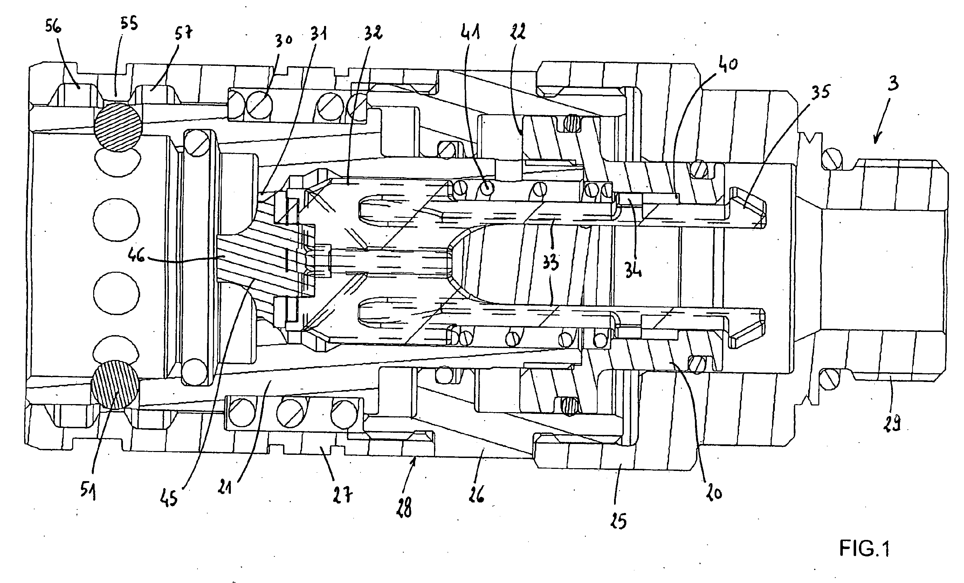

Sur la figure 1, l'élément femelle 3 comprend trois pièces assemblées 25, 26 et 27 qui forment un manchon extérieur fixe 28 et une extrémité 29, dite "adapteur", de raccordement à la conduite, et deux pièces assemblées 20 et 21 formant un corps intérieur 22 contenant la soupape de l'élément femelle 3.

Le corps intérieur 22 est mobile en coulissement par rapport au manchon extérieur 28, un ressort 30 étant interposé entre eux. Le ressort 30 maintient normalement le corps intérieur 22 et le manchon extérieur 28 dans la position relative montrée en figure 1.

La soupape de l'élément femelle 3 comprend un siège formé par une saillie annulaire 31, un clapet obturateur 45 prolongé antérieurement par un téton cylindrique 46.

Le clapet 45 est prolongé postérieurement par un organe à butée escamotable 32 de forme générale sensiblement tubulaire en une matière thermoplastique de haute technicité, avec un diamètre correspondant au jeu près au diamètre interne de la pièce 21 du corps intérieur 22, de manière à coulisser dans le corps 22.

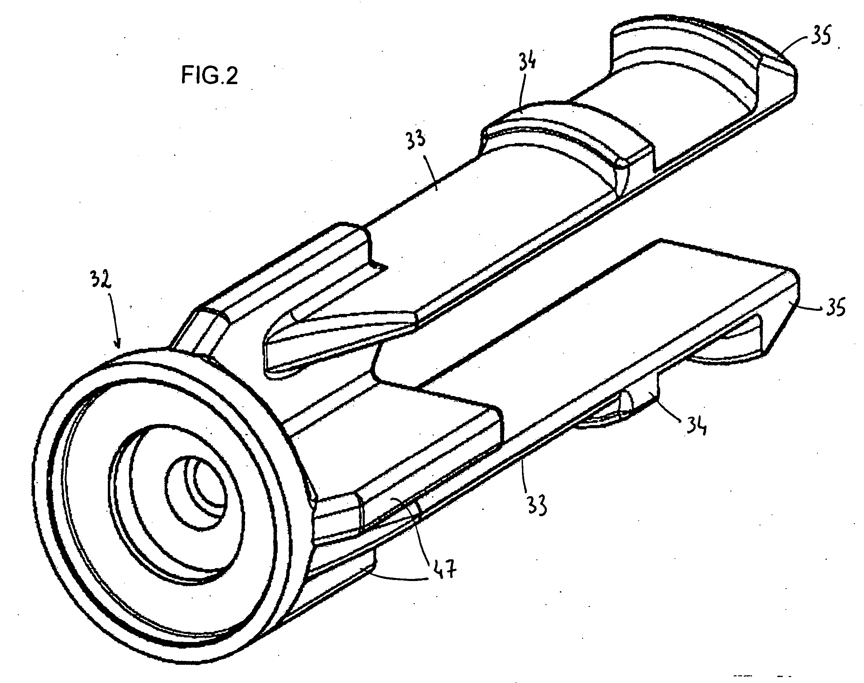

Comme indiqué plus particulièrement sur la figure 2, l'organe à butée escamotable 32 comporte une partie antérieure de fixation au clapet 45 et un corps principal en forme de tige pourvue de quatre ailettes de guidage 47, en saillie radiale vers l'extérieur. Ces ailettes 47 assurent aussi un positionnement et un guidage de l'organe 32 dans le corps intérieur 22, et ne perturbent pas l'écoulement du fluide et permettent également d'aménager une section de passage de fluide suffisante pour assurer de bonnes performances hydrodynamiques de l'ensemble, c'est à dire une surface projetée d'environ 100 mm².

La partie postérieure de l'organe à butée escamotable 32 est ouverte en regard de l'embouchure de la cavité cylindrique de l'extrémité 29 de raccordement, et présente deux fentes longitudinales qui créent des pattes longitudinales 33 en vis-à-vis et diamétralement opposées dont le maintien en position normale est assuré par l'élasticité de l'organe 32.

Les deux pattes 33 sont élastiquement déformables en direction radiale vers l'intérieur de manière à former une sorte de pince, et elles débouchent hors du corps intérieur 22 à proximité de l'extrémité 29 de raccordement à la conduite.

La pièce 20 en arrière de la pièce 21 présente consécutivement, de l'avant vers l'arrière, un premier diamètre interne correspondant sensiblement au diamètre interne de la pièce 21, puis un deuxième diamètre interne inférieur au premier, et enfin un troisième diamètre interne encore inférieur, correspondant sensiblement au diamètre interne de l'extrémité 29 de raccordement à la conduite d'alimentation en fluide (non représentée).

La paroi postérieure des ailettes 47 de l'organe 32 est en appui contre un ressort 41, lequel prend appui contre un épaulement qui délimite lesdits premier et deuxième diamètres internes de la pièce 20 du corps intérieur 22.

Les pattes 33 sont entourées par les spires du ressort 41. A cet effet, les deux pattes 33 sont essentiellement inscrites dans un volume cylindrique de diamètre correspondant au jeu près au troisième diamètre interne de la pièce 20 formant partie du corps intérieur 22.

Toutefois, les pattes 33 présentent chacune une saillie radiale 34 vers l'extérieur dont le diamètre extérieur correspond au jeu près au deuxième diamètre interne de la pièce 20 du corps 22. La saillie 34 forme une butée contre un épaulement annulaire 40 qui délimite lesdits deuxième et troisième diamètres internes de la pièce 20 du corps intérieur 22.

En outre, les extrémités des pattes 33 qui débouchent hors de la pièce 20 du corps intérieur 22, à proximité de l'extrémité 29 de raccordement à la conduite, forment chacune également un épaulement 35 radial vers l'extérieur inscrit dans un volume en tronc de cône, de forme complémentaire à une rampe annulaire aménagée à l'embouchure de l'adapteur 29 et inclinée vers la conduite.

Les pattes 33 sont aptes à s'introduire à l'intérieur de l'adapteur 29 en se déformant radialement vers l'intérieur sous la poussée de ladite rampe annulaire à l'embouchure de l'adapteur 29 contre les rampes correspondantes formées par les épaulements 35 aux extrémités des pattes 33.

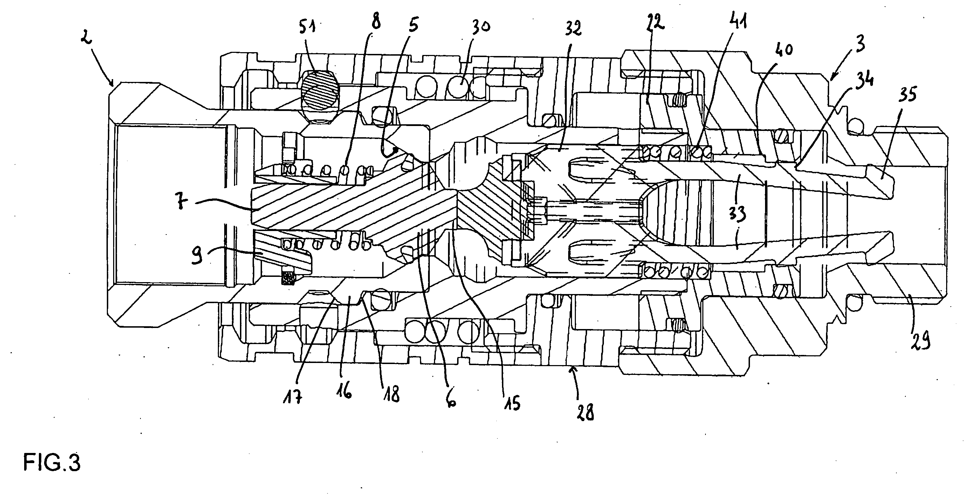

En outre, la pièce 21 du corps intérieur 22 comprend, au niveau de sa cavité destinée à recevoir l'élément mâle 2, des billes 51 engagées dans des alésages radiaux aménagés au travers de la paroi de la pièce 21 du corps 22. Ces billes 51 sont mobiles radialement dans ces alésages, entre une position intérieure, représentée aux figures 1, 4, 5, et une position extérieure, représentée aux figures 3, 6, 7.

Le manchon extérieur 28 comprend, quant à lui, à hauteur de ces billes 51, une saillie annulaire intérieure 55 à pans latéraux inclinés, délimitant deux gorges 56 et 57.

La figure 3 illustre la première étape de connexion du coupleur objet de l'invention, lorsque l'élément mâle 2 est engagé dans la cavité de l'élément femelle 3.

De manière connue en soi, la soupape de l'élément mâle comprend un siège 5, un clapet 6 prolongé côté intérieur par une tige de guidage 7, un ressort de rappel 8 pressant cet clapet 6 contre le siège 5 et une butée fixe 9 recevant la tige 7 en coulissement et contre laquelle s'appuie le ressort 8. La butée 9 limite la course d'ouverture du clapet 6.

Du côté extérieur, le clapet 6 comprend un téton cylindrique 15 venant s'appuyer contre le téton cylindrique 46 du clapet 45 de l'élément femelle lors de la connexion des éléments mâle et femelle.

En outre, l'élément mâle 2 comprend une saillie annulaire extérieure 16 à pans latéraux inclinés, délimitant deux gorges 17 et 18.

L'élément mâle 2, relié à l'outil actionné par le fluide, contient du fluide sous pression, tandis que l'élément femelle 3 relié à la source de fluide n'est pas sous pression.

Au cours de l'engagement de l'élément mâle 2, la saillie 16 vient rencontrer les billes 51, qui sont maintenues dans une position intérieure maximale par la saillie 55, située en face d'elle. Simultanément, le téton 15 du clapet 6 vient au contact du téton correspondant 46 du clapet 45.

La poursuite de l'engagement de l'élément mâle 2 provoque un déplacement, vers la droite de la figure, du corps intérieur 22 par rapport au manchon extérieur 28.

Ce déplacement entraîne une compression des ressorts 30 et 41, ainsi que l'engagement des pattes 33 à l'intérieur de l'adapteur 29 par déformation radiale vers l'intérieur (rétreinte) sous la contre-poussée de la rampe annulaire à l'embouchure de l'adapteur 29 contre les rampes correspondantes formées par les épaulements 35 aux extrémités des pattes 33.

Ce déplacement se poursuit jusqu'à ce que les billes 51 se trouvent en face de la gorge 57, et soient poussées dans celle-ci par le pan latéral incliné de la saillie 16.

Ici, le recul à l'encontre du ressort 41, et donc la déformation radiale, des pattes 33 sont suffisamment importants pour que les saillies 34 des pattes 33 s'engagent "sous" l'épaulement annulaire 40 de la pièce 20 du corps intérieur 22 de sorte que la butée de limitation de course du clapet 45 est ainsi escamotée.

L'élément mâle 2 étant complètement engagé dans la cavité de l'élément femelle 3, la gorge 17 vient en face des billes 51, et ces billes 51 sont chassées dans cette gorge 17, ce qui réalise le verrouillage des éléments mâle 2 et femelle 3.

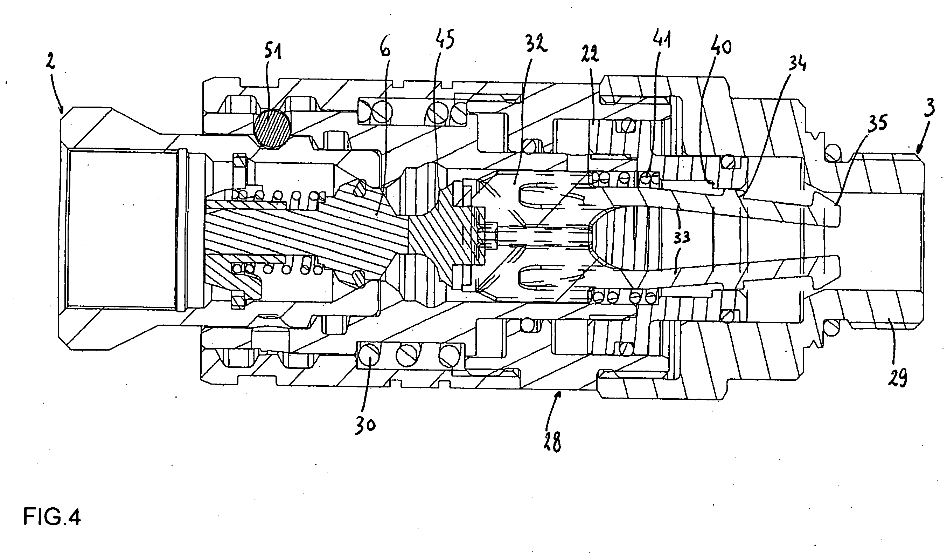

Suite au relâchement de l'effort axial d'engagement de l'élément mâle 2 dans l'élément femelle 3, représenté sur la figure 4, le ressort 30 est libéré et ramène le corps interne 22 et le manchon extérieur 28 à leur position relative d'origine, les extrémités des pattes 33 étant toujours "rétreintes" à l'intérieur de l'adapteur 29.

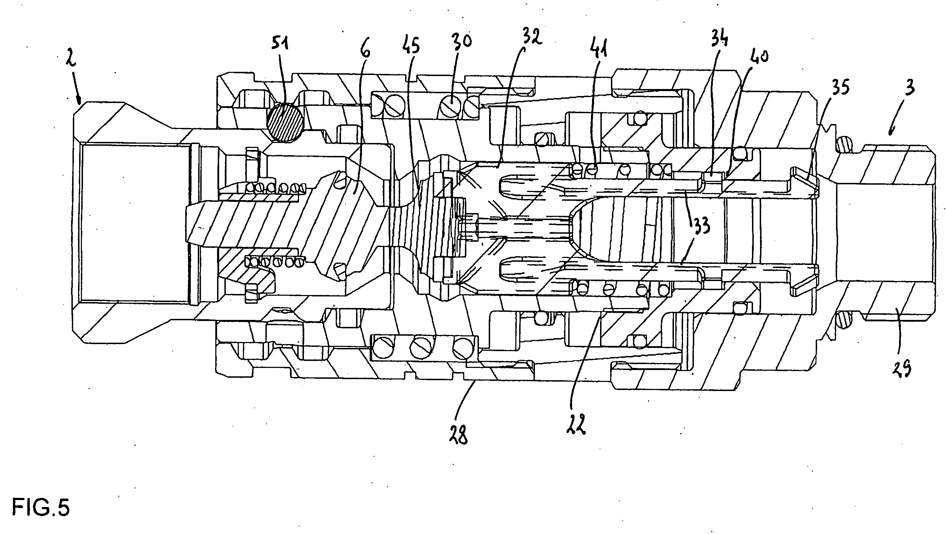

Lorsque la pression est établie dans l'élément femelle 3, le fluide déplace l'organe 32 et le clapet 45 vers la gauche des figures jusqu'à leur position représentée à la figure 5.

Grâce au ressort 41, les deux soupapes sont alors ouvertes, avec les deux clapets 6 et 45 immobilisés en position, le clapet 6 étant en butée contre la butée fixe 9, et le clapet 45 et son organe support 32 en appui contre le ressort 41.

Les pattes 33 sont libérées de leur position à l'intérieur de l'adapteur 29 et restent en position "ouverte", non rétreinte, de par leur élasticité naturelle. Elles viennent alors en butée par leurs saillies 34 contre l'épaulement annulaire 40 (de butée de limitation de course) de la pièce 20 du corps 22, de sorte que la butée de limitation de course du clapet 45 est rétablie.

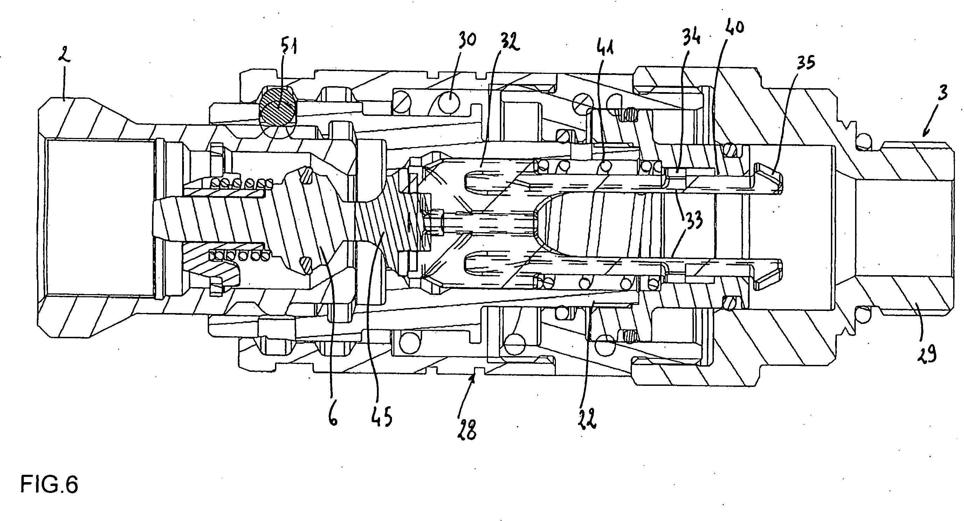

La déconnexion (voir figure 6) des éléments mâle 2 et femelle 3 est réalisée en opérant une traction sur l'élément mâle, ce qui déplace le corps intérieur 22 vers la gauche jusqu'à ce que les billes 51 passent dans la gorge 56. La soupape de l'élément femelle 3 est alors fermée de façon étanche.

L'écoulement du fluide au travers de l'organe 32 n'est pas perturbé, et les ailettes de guidage 47 permettent d'optimiser cet écoulement.

En outre, le clapet 45 fait partie intégrante de l'organe 32 et est parfaitement guidé dans le corps 22, ce qui assure une bonne résistance de la soupape à des pressions élevées.

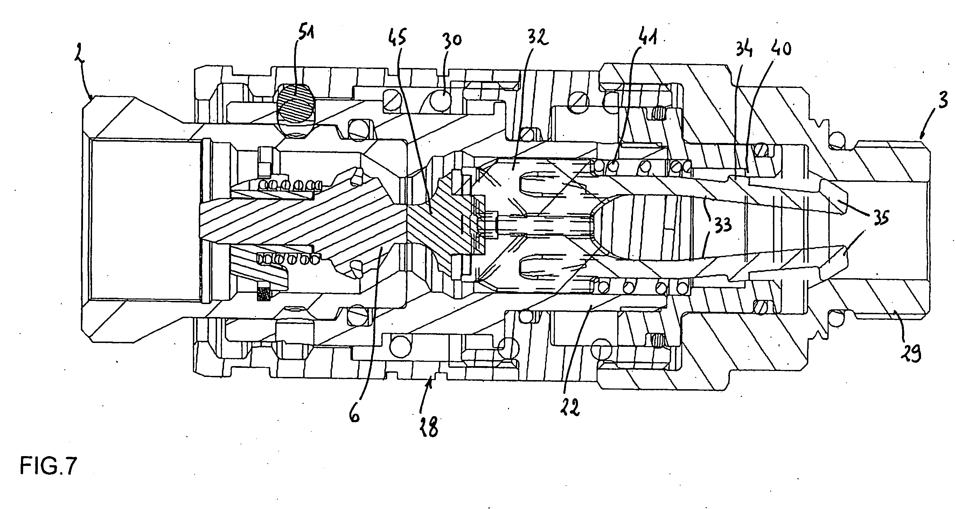

Le ressort 9 est moins raide que le ressort 41, de sorte qu'en cas d'absence de pression dans l'élément mâle 2, la soupape de l'élément mâle 2 s'ouvre (voir figure 7) du fait de la seule force de rappel du ressort 41 supérieure, selon la norme ISO7241-A en 1/2", à 45 N.

L'organe 32 est ici réalisé en une matière thermoplastique de haute technicité mais pourrait être également réalisé en laiton, en acier inoxydable ou en tout matériau permettant de répondre aux contraintes suivantes:
- un module d'élasticité longitudinal élevé pour supporter les efforts de compression dus à la composante axiale des efforts hydrodynamiques;
- un module d'élasticité transversal élevé pour développer un effort suffisant au retour des pattes 33 de l'organe 32 en position ouverte (non rétreinte) et donc en butée contre l'épaulement 40;
- un coefficient d'allongement A% élevé pour supporter une flèche importante des pattes 33 sans déformation rémanente;
- une tenue des caractéristiques minimales à des températures supérieures à 110°C.

Comme il va de soi, l'invention ne se limite pas à la seule forme de réalisation décrite ci-dessus à titre d'exemple indicatif; elle en embrasse, au contraire, toutes les variantes de réalisation et d'application respectant le même principe. C'est ainsi notamment que l'on ne s'éloignerait pas du cadre de l'invention en réalisant le clapet 45 ou l'organe 32 en plusieurs éléments assemblés de même matériau ou de matériaux différents.

Il serait également possible de concevoir un mécanisme similaire avec un organe également en forme de pince dentée mais solidaire de l'adapteur 29.

Durant la phase de connexion, lors du mouvement de recul, cet organe est actionné en fermeture par le piston (pièce 20), s'effaçant ainsi lors du recul en double course du clapet 45 de l'élément femelle. A l'équilibrage, grâce à son élasticité, la "pince" se redéploie en position ouverte et assure une butée positive au clapet 45 revenu en position de circuit ouvert.

Cette alternative, qui n'entre pas dans le cadre de la présente invention, présente un intérêt dans le choix des matériaux qui peuvent être plus classiques que dans la présente invention, car les caractéristiques techniques et dimensionnelles peuvent être réparties sur deux pièces au lieu d'une seule.

En revanche, les caractéristiques de cette version sont limitées en terme de débit de retour maximal autorisé. Cette limitation est directement liée aux caractéristiques de force du ressort 30 de rappel du corps intérieur mobile 22.

En effet, l'ensemble des clapets des éléments mâle 2 et femelle 3 est soumis à des efforts hydrodynamiques, dans un débit de l'élément mâle 2 vers l'élément femelle 3, qui vont pousser sur la "pince" de l'adapteur 29, soit un élément du manchon extérieur fixe 28. D'autre part, la force de réaction à ces efforts hydrodynamiques est assurée par le mécanisme de verrouillage de l'élément mâle 2 qui est solidarisé au corps intérieur mobile 22 de l'élément femelle 3 et qui a donc tendance à sortir du manchon extérieur fixe 28. Seul le ressort 30 compense ce phénomène entre les deux référentiels fixe et mobile et quand l'effort dû aux forces hydrodynamiques devient plus important que l'effort du ressort 30, l'élément mâle 2 se désaccouple de façon inopinée et provoque une fermeture brutale du circuit hydraulique. Il faut raccoupler l'élément mâle 2 pour remettre le système hydraulique en fonction.

Les limites constatées sur banc d'essais montrent l'apparition d'une déconnexion accidentelle aux alentours de 150 l/mn pour un ressort 30 taré à 220 N et un coupleur hydraulique de 1/2" de taille et présentant des sections de passage relativement continues d'environ 100 mm².

## Revendications

1. Coupleur rigide pour conduites de fluide sous pression, permettant la connexion de ces conduites alors que du fluide sous pression subsiste dans l'une d'elles, du type comprenant un élément mâle (2) et un élément femelle (3) dont les extrémités à connecter sont fermées par des soupapes, l'élément mâle (2) étant relié à la conduite dans laquelle subsiste le fluide sous pression, l'élément femelle (3) possédant un manchon extérieur fixe (28) comportant une extrémité (29) de raccordement à l'autre conduite, et un corps intérieur (22) qui contient la soupape de l'élément femelle (3) et qui est mobile en coulissement dans le manchon extérieur (28), chaque soupape comprenant un clapet obturateur (6, 45) venant appuyer contre le clapet obturateur (45, 6) de l'autre soupape lors de la connexion, un ressort de rappel (8, 41) pressant ce clapet (6, 45) contre un siège (31, 5) et une butée (9, 34) limitant la course d'ouverture du clapet (6, 45), la butée (6) de l'élément mâle (2) étant fixe, tandis que l'autre butée (34) est montée coulissante dans l'élément femelle (3) de manière à pouvoir occuper une position fixe avancée dans laquelle le clapet (45) qui lui est associé est en appui contre la butée (34) lorsque les éléments mâle (2) et femelle (3) sont connectés, et à pouvoir reculer dans l'élément femelle (3) afin d'autoriser un recul de son clapet (45) au-delà de la course d'ouverture précitée, la distance de recul correspondant sensiblement à la course d'ouverture du clapet (6) de l'élément mâle (2), des moyens (33) de verrouillage et de rappel de la butée coulissante (34) en position avancée étant prévus et aptes à autoriser le mouvement de recul de la butée coulissante (34) lors de la connexion des éléments mâle (2) et femelle (3), et verrouiller la butée coulissante (34) en position avancée une fois cette connexion réalisée, **caractérisé en ce que** le clapet (45) de l'élément femelle (3) est prolongé postérieurement par un organe à butée escamotable (32) de forme générale sensiblement tubulaire en matière élastiquement déformable, présentant au moins une saillie radiale (34) vers l'extérieur formant butée contre une saillie radiale (40) vers l'intérieur correspondante du corps intérieur (22), ainsi qu'une extrémité ouverte (35) en regard de l'embouchure de la cavité cylindrique de l'extrémité (29) de raccordement, le recul simultané du corps intérieur (22) dans le manchon extérieur (28) et du clapet (45) dans le corps intérieur (22) ayant pour effet de rétreindre cette extrémité ouverte (35) en l'introduisant de force dans ladite cavité cylindrique de l'extrémité (29) de raccordement, de manière à effacer ladite butée (34).

2. Coupleur rigide selon la revendication 1, **caractérisé en ce que** l'embouchure de la cavité cylindrique de l'extrémité (29) de raccordement est chanfreinée de manière à former une rampe annulaire, et **en ce que** l'extrémité ouverte (35) de l'organe à butée escamotable (32) est de forme tronconique pour glisser contre cette rampe annulaire, se rétreindre et s'introduire dans la cavité.

3. Coupleur rigide selon la revendication 1 ou 2, **caractérisé en ce que** l'organe à butée escamotable (32) présente au moins deux fentes longitudinales créant des pattes longitudinales (33) dont le maintien en position normale est assuré par l'élasticité de l'organe (32).

4. Coupleur rigide selon l'une quelconque des revendications 1 à 3, **caractérisé en ce que** l'organe à butée escamotable (32) comporte une partie antérieure de fixation au clapet (45) et un corps principal en forme de tige pourvue d'au moins deux ailettes de guidage (47), en saillie radiale vers l'extérieur.

## Claims

1. Rigid coupling for pipes carrying pressurized fluid, allowing these pipes to be connected while pressurized fluid remains in one of them, of the type comprising a male element (2) and a female element (3) of which the ends that are to be connected are closed by valves, the male element (2) being connected to the pipe in which the pressurized fluid remains, the female element (3) having a fixed external sleeve (28) comprising an end (29) for connecting to the other pipe, and an internal body (22) which contains the valve of the female element (3) and which is able to slide in the external sleeve (28), each valve comprising a valve shutter (6, 45) that presses against the valve shutter (45, 6) of the other valve upon connection, a return spring (8, 41) pressing this shutter (6, 45) against a seat (31, 5) and a limit stop (9, 34) limiting the opening travel of the shutter (6, 45), the limit stop (6) of the male element (2) being fixed, while the other limit stop (34) is slideably mounted in the female element (3) so that it can occupy a forward fixed position in which the shutter (45) associated with it is pressed against the limit stop (34) when the male (2) and female (3) elements are connected, and so as to be able to retreat into the female element (3) so as to allow the shutter (45) thereof to retreat further than the aforementioned opening travel, the distance retreated corresponding substantially to the opening travel of the shutter (6) of the male element (2), means (33) of locking and of returning the sliding limit stop (34) into/in the forward position being provided and capable of allowing the retreating movement of the sliding limit stop (34) upon connection of the male (2) and female (3) elements and of locking the sliding limit stop (34) in the forward position once this connection has been made, **characterized in that** the shutter (45) of the female element (3) is extended at the rear by a retractable limit stop member (32) of substantially tubular overall shape made of an elastically deformable material having at least one outward radial projection (34) forming a limit stop against a corresponding inward radial projection (40) of the internal body (22), and an open end (35) facing the mouth of the cylindrical cavity in the connection end (29), the simultaneous retreat of the internal body (22) inside the external sleeve (28) and of the shutter (45) inside the internal body (22) having the effect of narrowing this open end (35) by forcibly inserting it into said cylindrical cavity at the connection end (29), so as to retract said limit stop (34).

2. Rigid coupling according to Claim 1, **characterized in that** the mouth of the cylindrical cavity at the connection end (29) is chamfered in such a way as to form an annular ramp, and **in that** the open end (35) of the retractable limit stop member (32) is of frustoconical shape so that it can slide against this annular ramp, become narrowed, and enter the cavity.

3. Rigid coupling according to Claim 1 or 2, **characterized in that** the retractable limit stop member (32) has at least two longitudinal slots creating longitudinal legs (33) which are kept in the normal position by the elasticity of the member (32).

4. Rigid coupling according to any one of Claims 1 to 3, **characterized in that** the retractable limit stop member (32) comprises an anterior part for attachment to the shutter (45) and a rod-shaped main body provided with at least two guide fins (47) projecting radially outward.

## Patentansprüche

1. Steife Kopplungsvorrichtung für Leitungen mit unter Druck stehenden Fluiden, die die Verbindung dieser Leitungen gestattet, während unter Druck stehendes Fluid noch in einer davon vorhanden ist, jener Art, die ein Steckelement (2) und ein Aufnahmeelement (3) aufweist, deren zu verbindende Enden durch Ventile geschlossen sind, wobei das Steckelement (2) mit der Leitung verbunden ist, in der das unter Druck stehende Fluid noch vorhanden ist, wobei das Aufnahmeelement (3) eine feststehende äußere Hülse (28), die ein Ende (29) zum Anschluss an die andere Leitung aufweist, und einen inneren Körper (22), der das Ventil des Aufnahmeelements (3) enthält und der in der äußeren Hülse (28) verschiebbar ist, aufweist, wobei jedes Ventil eine Verschlussklappe (6, 45) aufweist, die bei der Verbindung in Anlage an die Verschlussklappe (6, 45) des anderen Ventils kommt, wobei eine Rückstellfeder (8, 41) diese Klappe (6, 45) gegen einen Sitz (31, 5) drückt und ein Anschlag (9, 34) den Öffnungshub der Klappe (6, 45) begrenzt, wobei der Anschlag (9) des Steckelements (2) feststehend ist, während der andere Anschlag (34) verschiebbar in dem Aufnahmeelement (3) angebracht ist, so dass er eine vorgerückte feststehende Position einnehmen kann, in der die ihm zugeordnete Klappe (45) an dem Anschlag (34) anliegt, wenn das Steckelement (2) und das Aufnahmeelement (3) verbunden sind, und so dass er sich in das Aufnahmeelement (3) zurückziehen kann, um ein Zurückziehen seiner Klappe (45) über den obengenannten Öffnungshub hinaus zu gestatten, wobei die Zurückziehstrecke dem Öffnungshub der Klappe (6) des Steckelements (2) im Wesentlichen entspricht, wobei Mittel (33) zur Verriegelung und zum Zurückstellen des verschiebbaren Anschlags (34) in der bzw. die vorgerückte(n) Position vorgesehen sind und die Zurückziehbewegung des verschiebbaren Anschlags (34) bei Verbindung des Steckelements (2) und des Aufnahmeelements (3) und die Verriegelung des verschiebbaren Anschlags (34) in der vorgerückten Position nach Herstellung dieser Verbindung gestatten können, **dadurch gekennzeichnet, dass** die Klappe (45) des Aufnahmeelements (3) hinten durch ein klappbares Anschlagglied (32) mit im Wesentlichen allgemein röhrenförmiger Gestalt aus einem elastisch verformbaren Material verlängert ist, das mindestens einen radialen Vorsprung (34) nach außen, der einen Anschlag gegen einen entsprechenden radialen Vorsprung (40) nach innen des inneren Körpers (22) bildet, sowie ein offenes Ende (35) gegenüber der Mündung des zylindrischen Hohlraums des Anschlussendes (29) bildet, wobei das gleichzeitige Zurückziehen des inneren Körpers (22) in der äußeren Hülse (28) und der Klappe (45) im inneren Körper (22) ein Verschmälern dieses offenen Endes (35) bewirkt, indem es in den zylindrischen Hohlraum des Anschlussendes (29) eingeführt wird, um den Anschlag (34) zurückzuziehen.

2. Steife Kopplungsvorrichtung nach Anspruch 1, **dadurch gekennzeichnet, dass** die Mündung des zylindrischen Hohlraums des Anschlussendes (29) so abgeschrägt ist, dass sie eine ringförmige Rampe bildet, und dass das offene Ende (35) des klappbaren Anschlagglieds (32) eine kegelstumpfförmige Gestalt aufweist, um auf dieser ringförmigen Rampe zu gleiten, sich zu verschmälern und in den Hohlraum eingeführt zu werden.

3. Steife Kopplungsvorrichtung nach Anspruch 1 oder 2, **dadurch gekennzeichnet, dass** das klappbare Anschlagglied (32) mindestens zwei Längsschlitze aufweist, die Längsschenkel (33) schaffen, welche durch die Elastizität des Glieds (32) in Normalstellung gehalten werden.

4. Steife Kopplungsvorrichtung nach einem der Ansprüche 1 bis 3, **dadurch gekennzeichnet, dass** das klappbare Anschlagglied (32) einen vorderen Teil zur Befestigung an der Klappe (45) und einen stangenförmigen Hauptkörperumfasst, der mit mindestens zwei Führungsrippen (47), die radial nach außen vorstehen, versehen ist.
